# EUROPÄISCHE PATENTANMELDUNG

(11) **EP 4 163 134 A1**
(43) Veröffentlichungstag der Anmeldung: **12.04.2023**
(21) Anmeldenummer: 21201633.1
(22) Anmeldetag: 08.10.2021
(51) Int. Cl.: B60D 1/36, B60D 1/62, G06T 7/00, B60W 30/00

(54) **VERFAHREN ZUM UNTERSTÜTZEN WÄHREND EINES ANKOPPELVORGANGS MIT EINEM ANHÄNGER, RECHENEINRICHTUNG SOWIE ASSISTENZSYSTEM FÜR EIN FAHRZEUG**

(71) Anmelder: Bayerische Motoren Werke Aktiengesellschaft, 80809 München (DE)
(72) Erfinder: Stroebel, Michael, 82194 Gröbenzell (DE)

(57) **Zusammenfassung**

Ein erfindungsgemäßes Verfahren zum Unterstützen eines Fahrers eines Fahrzeugs bei einem Ankoppelvorgang des Fahrzeugs mit einem Anhänger umfasst ein Empfangen von Umfelddaten von zumindest einem Umfeldsensor. Zudem umfasst das Verfahren ein Erfassen von Parametern des Anhängers mittels der Umfelddaten. Darüber hinaus umfasst das Verfahren ein Bestimmen einer Lageposition des Fahrzeugs mittels der Umfelddaten und/oder unter Berücksichtigung der Parameter des Anhängers. Das Verfahren umfasst zudem ein Erfassen einer Systemeingabe des Fahrers des Fahrzeugs, wobei die Systemeingabe einen Unterstützungswunsch des Fahrers zum Ankoppeln des Anhängers an das Fahrzeug beschreibt. Schließlich umfasst das Verfahren ein Planen einer Trajektorie für das Fahrzeug, wobei die Trajektorie in dem Ausgangspunkt beginnt und dadurch bestimmt ist, dass eine Fahrzeug-Kupplungseinheit des Fahrzeugs sich nach einem Manövrieren des Fahrzeugs entlang der Trajektorie in einem Toleranzbereich um die Anhänger-Kupplungseinheitsposition befindet. Dabei umfasst die Systemeingabe eine explizite Eingabe eines Kupplungswinkels und/oder ein Bestimmen des Kupplungswinkels in Abhängigkeit von der Systemeingabe.

## Beschreibung

Die vorliegende Erfindung betrifft ein Verfahren zum Unterstützen eines Fahrers eines Fahrzeugs bei einem Ankoppelvorgang des Fahrzeugs mit einem Anhänger. Darüber hinaus betrifft die vorliegende Erfindung ein Assistenzsystem für ein Fahrzeug zum Unterstützen eines Fahrers des Fahrzeugs bei einem Ankoppelvorgang des Fahrzeugs mit einem Anhänger. Schließlich betrifft die vorliegende Erfindung eine Recheneinrichtung für ein Assistenzsystem eines Fahrzeugs.

Verfahren und Systeme zum Unterstützen eines Fahrers eines Fahrzeugs bei einem Ankoppelvorgang, bei welchem ein Anhänger an das Fahrzeug angekoppelt wird, sind seit geraumer Zeit bekannt. Derartige Systeme werden oftmals auch als Trailer Coupling Assistant bezeichnet. Meist wird dabei mit der vorhandenen Sensorik des Fahrzeugs, beispielsweise einem Ultraschall-Sensor, einer Kamera oder dergleichen, die Anhängerkupplung des Anhängers erfasst. Im Anschluss daran kann der Fahrer bei einem Manövrieren des Fahrzeugs hin zu einer möglichen Koppelposition unterstützt werden, sodass der Anhänger anschließend an das Fahrzeug angekoppelt werden kann.

Die Druckschrift DE 10 2009 045 284 A1 betrifft ein Verfahren zur Unterstützung eines Fahrers eines Kraftfahrzeugs bei einem Fahrmanöver zum Ankoppeln eines anzukoppelnden Objekts mit einem Ankopplungspunkt an eine Anhängevorrichtung des Kraftfahrzeugs, bei dem das anzukoppelnde Objekt steht und das Kraftfahrzeug zum anzukoppelnden Objekt bewegt wird, bei dem zunächst der Abstand und die Richtung des Ankopplungspunktes zur Anhängevorrichtung des Kraftfahrzeugs mit mindestens einem Abstandsensor erfasst wird und der Abstand und die Richtung zwischen Ankopplungspunkt und Anhängevorrichtung für den Fahrer dargestellt wird.

Die Offenlegungsschrift DE 10 2010 004 920 A1 betrifft eine Vorrichtung zur Unterstützung des Ankuppelns eines Anhängers an eine Anhängerkupplung eines Kraftfahrzeugs sowie ein Verfahren zum Ankuppeln eines Anhängers an ein Kraftfahrzeug. Dabei sind Einrichtungen zur Ermittlung der Relativposition einer Anhängerkupplung eines Anhängers in Bezug zur Anhängerkupplung des Kraftfahrzeugs sowie zum Steuern der Bewegung des Kraftfahrzeugs und/oder einer Relativbewegung der Anhängerkupplung des Kraftfahrzeugs in Bezug zum Kraftfahrzeug auf der Grundlage der sensorisch ermittelten Relativposition vorgesehen.

Die Druckschrift DE 10 2018 202 613 A1 betrifft ein Verfahren zum Unterstützen eines Ankoppelvorgangs eines Kraftfahrzeugs an einen Anhänger, bei welchem mittels eines Anhängerkuppelassistenten eine Position eines anhängerseitigen Kupplungselements erkannt und basierend darauf das Fahrzeug zumindest teilautonom in eine Zielposition manövriert wird, in welcher eine Anhängerkupplung des Kraftfahrzeugs in einer vorgegebenen Ankoppelstellung zum anhängerseitigen Kupplungselement angeordnet ist. Dabei wird während des Manövriervorgangs mittels einer Einparkhilfe ein rückwärtiger Überwachungsbereich des Kraftfahrzeugs überwacht. Dabei wird die Einparkhilfe bei deaktiviertem Anhängerkuppelassistenten in einem Standardmodus betrieben. Ferner wird die Einparkhilfe bei aktiviertem Anhängerkuppelassistenten in einem Ankoppelmodus betrieben, in welchem mittels der Einparkhilfe auf die im rückwärtigen Bereich bezogene Hinderniswarnungen anders als im Standardmodus ausgegeben werden.

Es ist Aufgabe der vorliegenden Erfindung, eine Lösung aufzuzeigen, wie ein Fahrer eines Fahrzeugs über den Stand der Technik hinaus während eines Ankoppelvorgangs mit einem Anhänger unterstützt werden kann.

Diese Aufgabe wird erfindungsgemäß durch ein Verfahren, durch eine Recheneinrichtung sowie durch ein Assistenzsystem für ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren zum Unterstützen eines Fahrers eines Fahrzeugs bei einem Ankoppelvorgang des Fahrzeugs mit einem Anhänger umfasst ein Empfangen von Umfelddaten von zumindest einem Umfeldsensor. Zudem umfasst das Verfahren ein Erfassen von Parametern des Anhängers mittels der Umfelddaten, wobei die Parameter zumindest eine Anhängerlängsachse und eine Anhänger-Kupplungseinheitsposition einer Anhänger-Kupplungseinheit des Anhängers beschreiben. Darüber hinaus umfasst das Verfahren ein Bestimmen einer Lageposition des Fahrzeugs mittels der Umfelddaten und/oder unter Berücksichtigung der Parameter des Anhängers, wobei die Lageposition zumindest eine Position des Fahrzeugs relativ zu der Anhänger-Kupplungseinheitsposition sowie eine Fahrzeuglängsachse relativ zu der Anhängerlängsachse beschreibt. Das Verfahren umfasst zudem ein Erfassen einer Systemeingabe des Fahrers des Fahrzeugs mittels einer Mensch-Maschine-Schnittstelle, wobei die Systemeingabe einen Unterstützungswunsch des Fahrers zum Ankoppeln des Anhängers an das Fahrzeug beschreibt. Schließlich umfasst das Verfahren ein Planen einer Trajektorie für das Fahrzeug, wobei die Trajektorie in dem Ausgangspunkt beginnt und dadurch bestimmt ist, dass eine Fahrzeug-Kupplungseinheit des Fahrzeugs sich nach einem Manövrieren des Fahrzeugs entlang der Trajektorie in einem Toleranzbereich um die Anhänger-Kupplungseinheitsposition befindet. Dabei umfasst die Systemeingabe eine explizite Eingabe eines Kupplungswinkels zwischen der Fahrzeuglängsachse und der Anhängerlängsachse und/oder ein Bestimmen des Kupplungswinkels in Abhängigkeit von der Systemeingabe. Zudem ist die Trajektorie zusätzlich dadurch bestimmt, dass sich die Fahrzeuglängsachse nach einem Manövrieren des Fahrzeugs entlang der Trajektorie im Kupplungswinkel zur Anhängerlängsachse befindet.

Das Fahrzeug kann beispielsweise als Personenkraftwagen ausgebildet sein. Darüber hinaus kann es sich bei dem Fahrzeug auch um einen Lastkraftwagen, einen Nutzkraftwagen, eine selbstfahrende Arbeitsmaschine, ein Wohnmobil oder dergleichen handeln. Insbesondere kann es sich bei dem Fahrzeug auch um einen Traktor, eine land- oder forstwirtschaftliche Zugmaschine, einen Sattelschlepper, einen Omnibus oder dergleichen handeln.

Der Anhänger kann beispielsweise als einfacher Pkw-Anhänger ausgebildet sein, welcher sowohl eine Auflaufbremse als auch eine eigene Betriebsbremse aufweisen kann. Darüber hinaus sind ebenso Bootstrailer, Wohnwagen, Pferdeanhänger, Sattelanhänger, eine Erntemaschine oder dergleichen denkbar. Im Allgemeinen ist dabei die Lenkungstechnik des Anhängers unerheblich. Insbesondere kann es sich also um einen ungelenkten Anhänger (starre Achse) handeln. Darüber hinaus kann der Anhänger auch eine Schwenkachslenkung bzw. eine Drehschemellenkung aufweisen.

Der Begriff der Anhänger-Kupplungseinheit sowie der Begriff der Fahrzeug-Kupplungseinheit, wie in diesem Dokument verwendet, soll allgemein zwei mechanisch zusammenwirkende, beispielsweise ineinandergreifende, Vorrichtungen bezeichnen, welche dazu eingerichtet sind, das Fahrzeug mit dem Anhänger zu verbinden. Je nach Art des Fahrzeuges und des Anhängers ist beispielsweise eine Bolzenkupplung, eine Maulkupplung oder eine Sattelkupplung denkbar und entsprechende Kupplungsteile sollen von dem Begriff der Anhänger-Kupplungseinheit bzw. dem Begriff der Fahrzeug-Kupplungseinheit umfasst werden. Insbesondere sollen unter dem Begriff der Anhänger-Kupplungseinheit bzw. dem Begriff der Fahrzeug-Kupplungseinheit auch die entsprechenden Kupplungsteile einer Kugelkopfkupplung, also eine Zugkugelkupplung bzw. eine Kupplungskugel, verstanden werden, welche vor allem im Personenkraftwagenbereich zusammen mit leichten Anhängern (mit/ohne Auflaufbremse) dem heutigen Kupplungsstandard entsprechen.

Der Begriff des Ankoppelvorgangs, wie er in diesem Dokument verwendet wird, umfasst dabei insbesondere auch das manuelle sowie zumindest teilautomatisierte Manövrieren bzw. Rangieren des Fahrzeugs entlang einer Trajektorie, an deren Ende der Anhänger an das Fahrzeug gekoppelt werden kann.

Bei dem erfindungsgemäßen Verfahren werden also Umfelddaten von zumindest einem Umfeldsensor empfangen. Vorzugsweise ist der zumindest eine Umfeldsensor am Fahrzeug angeordnet. Als Umfeldsensor kann beispielsweise eine Kamera, ein Radar-, ein Lidar-, ein Ultraschall-Sensor und/oder dergleichen verwendet werden. Dabei können die Umfelddaten beispielsweise in Form von Bilddaten, Punktewolken und/oder Objektlisten vorliegen. Die Umfelddaten können dabei stets eine Umgebung des Fahrzeugs beschreiben. Insbesondere können die Umfelddaten die Umgebung des Fahrzeugs, in welcher sich der Anhänger befindet, beschreiben. Die Umfelddaten können anschließend dazu verwendet werden, ausgewählte Parameter des Anhängers zu erfassen.

Darüber hinaus ist es auch denkbar, dass der zumindest eine Umfeldsensor, beispielsweise in Form von zumindest einem Ultraschall-Sensoren oder einer Kamera, an dem Anhänger angeordnet ist und per Funk- oder Kabelverbindung die Umfelddaten überträgt. Ebenso kann der zumindest eine Umfeldsensor Teil eines Infrastruktursystems sein. Beispielsweise kann ein derartiges Infrastruktursystem eine Parkplatz- oder Verkehrsüberwachungsanlage sein. Bekannte Stichworte in diesem Zusammenhang sind sogenannte automatisierte Valet-Parking-Systeme sowie sogenannte Smart-City-Systeme.

Beispielsweise können Bilddaten und/oder Lidar-Daten in Form von Punktewolken dazu verwendet werden, die Anhängerlängsachse zu bestimmen. Darüber hinaus können diese Daten auch dazu verwendet werden, die Anhänger-Kupplungseinheitsposition der Anhänger-Kupplungseinheit der Anhängerkupplung des Anhängers zu erfassen und zu beschreiben. Die Anhängerlängsachse und insbesondere die Anhänger-Kupplungseinheitsposition kann dazu verwendet werden, die relative Lage des Fahrzeugs zu dem Anhänger zu beschreiben. Umgekehrt kann natürlich auch die relative Lage des Anhängers zu dem Fahrzeug bzw. zur Fahrzeuglängsachse und der Fahrzeug-Kupplungseinheit der Anhängerkupplung des Fahrzeugs bestimmt werden.

Zur Beschreibung der relativen Lage des Fahrzeugs zu dem Anhänger kann die Lageposition des Fahrzeugs bestimmt werden. Hierfür können die Umfelddaten und/oder die zuvor bestimmten Parameter des Anhängers verwendet werden. Mit anderen Worten ist also die Anhänger-Kupplungseinheitsposition bzw. die Position des Anhängers sowie die Orientierung der Anhängerlängsachse bekannt. Darüber hinaus ist die relative Lage bzw. Orientierung der Fahrzeuglängsachse zur Anhängerlängsachse bekannt. Und schließlich ist die Position des Fahrzeugs bzw. die Position der Fahrzeug-Kupplungseinheit in Form des Ausgangspunktes relativ zu der Anhänger-Kupplungseinheitsposition bekannt. Es ist zudem denkbar, dass der Ausgangspunkt die Position der Fahrzeug-Kupplungseinheit nur indirekt beschreibt. Sofern der Ausgangspunkt beispielsweise die Position des Fahrzeugschwerpunktes beschreibt und die Position der Fahrzeug-Kupplungseinheit relativ zu dem Fahrzeugschwerpunkt bekannt ist, so beschreibt der Ausgangspunkt die Position der Fahrzeug-Kupplungseinheit ebenfalls, wenn auch nur indirekt.

Sofern der Fahrer des Fahrzeugs nun im Rahmen eines Ankoppelvorgangs des Fahrzeugs mit dem Anhänger unterstützt werden möchte, so kann der Fahrer des Fahrzeugs seinen Wunsch mittels einer Systemeingabe kenntlich machen. Die Systemeingabe kann dabei mittels einer Mensch-Maschine-Schnittstelle erfolgen. Eine derartige Mensch-Maschine-Schnittstelle kann ein (klassisches) Bedienelement, eine Gestensteuerung, eine Sprachsteuerung, ein Touch Screen oder dergleichen sein. Auf Basis der zuvor bestimmten Parameter des Anhängers, insbesondere der Anhängerlängsachse und der Anhänger-Kupplungseinheitsposition, sowie der Lageposition des Fahrzeugs, insbesondere der Fahrzeuglängsachse und des Ausgangspunktes des Fahrzeugs, kann eine Trajektorie für das Fahrzeug geplant werden. Die Trajektorie kann in dem Ausgangspunkt beginnen und in einem Punkt enden, sodass sich die Fahrzeug-Kupplungseinheit der Anhängerkupplung des Fahrzeugs in einem Toleranzbereich um die Anhänger-Kupplungseinheitsposition befindet. Mit anderen Worten endet die Trajektorie in einem Punkt, in welchem der Anhänger direkt an das Fahrzeug gekoppelt werden kann. Das Koppeln kann zum einen manuell und zum anderen teilautomatisiert oder auch automatisiert erfolgen.

Kennzeichnend für die Trajektorie ist zudem die Systemeingabe. Im Rahmen der Systemeingabe kann beispielsweise der Kupplungswinkel zwischen der Fahrzeuglängsachse und der Anhängerlängsachse, in welchem der Fahrer des Fahrzeugs den Anhänger an das Fahrzeug koppeln möchte, explizit eingegeben werden. Alternativ oder zusätzlich ist es denkbar, dass der Kupplungswinkel in Abhängigkeit von der Systemeingabe bestimmt wird. Ist beispielsweise ausreichend Platz zum Rangieren des Fahrzeugs vorhanden, wie es beispielsweise auf einem freien Gelände oder einem großen Parkplatz der Fall ist, so kann es von dem Fahrer des Fahrzeugs gewünscht sein, das Fahrzeug möglichst schnell in eine Position zu manövrieren, in welcher der Anhänger an das Fahrzeug angekoppelt werden kann. In einem derartigen Fall ist also die explizite Eingabe eines Kupplungswinkels nicht notwendigerweise von Vorteil. Stattdessen kann der Kupplungswinkel dadurch bestimmt sein, dass die Trajektorie möglichst wenig Fahrtrichtungswechsel während des Manövrierens aufweist. Darüber hinaus ist es auch denkbar, dass der Fahrer das Fahrzeug manuell in einen Bereich nahe dem Anhänger manövriert und mittels der Lageposition, in welche der Fahrer das Fahrzeug manuell manövriert hat, den Kupplungswinkel vorgibt. Mit anderen Worten gibt der Fahrer des Fahrzeugs mittels der Orientierung der Fahrzeuglängsachse relativ zu der Anhängerlängsachse den Kupplungswinkel vor.

In den beiden zuvor angeführten Beispielen, bei welchen die explizite Eingabe des Kupplungswinkels nicht nötig ist, ist es auch denkbar, dass dem Fahrer der Kupplungswinkel, welcher aufgrund der Orientierung der Fahrzeuglängsachse basierend auf einem manuellen Manövrieren oder eines gewünschten schnellstmöglichen Ankoppelvorgangs bestimmt werden kann, vorgeschlagen wird und die Systemeingabe folglich dennoch (wenn auch indirekt) eine explizite Eingabe des Kupplungswinkels umfasst.

Unabhängig davon, ob die Systemeingabe eine explizite Eingabe des Kupplungswinkels oder die implizite Eingabe eines Kupplungswinkels, also der Kupplungswinkel in Abhängigkeit von der Systemeingabe bestimmt wird, umfasst, ist die Trajektorie auch dadurch bestimmt, dass sich die Fahrzeuglängsachse nach einem etwaigen Manövrieren des Fahrzeugs entlang der Trajektorie im Kupplungswinkel zur Anhängerlängsachse befindet.

Darüber hinaus ist die Reihenfolge der Verfahrensschritte unerheblich. Beispielsweise ist es denkbar, dass die Trajektorie geplant wird, wenn die Systemeingabe durch den Fahrer erfolgt ist. Es ist jedoch auch denkbar, dass zunächst mehrere Trajektorien für unterschiedlichste Kupplungswinkel geplant werden, und der Fahrer des Fahrzeugs mit der Auswahl des Kupplungswinkels indirekt eine Trajektorie auswählt bzw. jene Trajektorie dem Ankoppelvorgang zugrunde gelegt wird, welche am besten zu der Systemeingabe passt.

Ferner ist es vorteilhaft, wenn ein maximaler Kupplungswinkelbereich bestimmt wird, aus welchem der Kupplungswinkel mittels der Mensch-Maschine-Schnittstelle im Rahmen der expliziten Eingabe durch den Fahrer auswählbar ist. Der maximale Kupplungswinkelbereich ist dabei jener Winkelbereich, in welchem der Anhänger an das Fahrzeug gekoppelt werden kann. Der maximale Kupplungswinkelbereich gibt also an, in welchem Kupplungswinkel die Fahrzeuglängsachse und die Anhängerlängsachse beim Ankoppeln des Anhängers an das Fahrzeug orientiert sein können.

Spricht man beispielsweise im Falle einer zur Anhängerlängsachse parallel orientierten Fahrzeuglängsachse von einem Kupplungswinkel von 0°, so kann ein maximaler Kupplungswinkelbereich beispielsweise durch ein Intervall von -60° bis +60° beschrieben werden. Der maximale Kupplungswinkelbereich kann mittels der Umfelddaten und/oder unter Berücksichtigung der Parameter des Anhängers bestimmt werden. Dieser maximale Kupplungswinkelbereich kann dem Fahrer des Fahrzeugs mittels der Mensch-Maschine-Schnittstelle und/oder eines zusätzlichen Bildschirms, einer Sprachausgabe und/oder dergleichen angezeigt bzw. mitgeteilt werden. Insbesondere kann der Fahrer oder ein Nutzer des Fahrzeugs den Kupplungswinkel aus dem maximalen Kupplungswinkelbereich mittels der Mensch-Maschine-Schnittstelle im Rahmen der Systemeingabe explizit eingeben, also auswählen.

Dem Fahrer des Fahrzeugs kann jedoch auch ein Kupplungswinkel, welcher sich im Bereich des maximalen Kupplungswinkelbereichs befindet, proaktiv vorgeschlagen werden. Ein derartiger proaktiver Vorschlag kann auf der aktuellen Lageposition des Fahrzeugs und/oder auf einer Trajektorie, welche dem schnellstmöglichen Koppeln des Anhängers an das Fahrzeug dient, basieren.

In einer vorteilhaften Ausgestaltung wird der maximale Kupplungswinkelbereich so bestimmt, dass zwischen dem Fahrzeug und einem Anhängeraufbau des Anhängers ein vorbestimmter Mindestabstand eingehalten wird. Beispielsweise kann es von Vorteil sein, wenn sich der Fahrer des Fahrzeugs oder eine weitere Person während des Ankoppelns des Anhängers an das Fahrzeug zwischen dem Anhänger und dem Fahrzeug bewegen kann. Wird das Fahrzeug entlang der geplanten Trajektorie manövriert und befindet sich die Fahrzeug-Kupplungseinheit des Fahrzeugs im Toleranzbereich um die Anhänger-Kupplungseinheitsposition, so steigt der Fahrer des Fahrzeugs für gewöhnlich aus und kuppelt den Anhänger an das Fahrzeug. Um keinen unnötigen Weg um das Fahrzeug und/oder um den Anhänger zurücklegen zu müssen, kann es von Vorteil sein, wenn zwischen dem Fahrzeug und dem Anhängeraufbau des Anhängers ein vorbestimmter Mindestabstand eingehalten wird.

Der Anhängeraufbau des Anhängers kann beispielsweise durch die Parameter des Anhängers beschrieben werden. Alternativ dazu kann der Anhängeraufbau des Anhängers auch mittels der Umfelddaten erfasst und beschrieben werden. Darüber hinaus kann mittels der Parameter des Anhängers oder mittels der Umfelddaten die Länge der Anhängerkupplung des Anhängers beschrieben werden. Je näher die Anhänger-Kupplungseinheit der Anhängerkupplung des Anhängers an dem Anhängeraufbau positioniert ist, desto kleiner kann der maximale Kupplungswinkelbereich ausfallen. Wird ein maximaler Kupplungswinkelbereich nun derart bestimmt, sodass sich im Falle eines maximalen Kupplungswinkels der Anhängeraufbau des Anhängers und das Fahrzeug nahezu berühren bzw. nur wenige Zentimeter, beispielsweise weniger als 10 cm, voneinander entfernt sind, so muss der Fahrer des Fahrzeugs gegebenenfalls um das Fahrzeug oder den Anhänger herum gehen, damit er den Anhänger an das Fahrzeug koppeln kann. Wird jedoch ein vorbestimmter Mindestabstand eingehalten, so schränkt sich der maximale Kupplungswinkelbereich gegebenenfalls ein. Wird der maximale Kupplungswinkelbereich wie in dem zuvor genannten Beispiel durch das Intervall von -60° bis +60° beschrieben, so kann sich der maximale Kupplungswinkelbereich aufgrund eines vorbestimmten Mindestabstands beispielsweise auf ein Intervall von -45° bis +45° beschränken.

Besonders vorteilhaft ist es zudem, wenn der vorbestimmte Mindestabstand zwischen dem Fahrzeug und dem Anhängeraufbau durch den Fahrer vorgebbar ist. Der Fahrer des Fahrzeugs kann also einen vorbestimmten Mindestabstand von beispielsweise einem Meter vorgeben. Durch eine derartige Vorgabe des vorbestimmten Mindestabstands zwischen dem Fahrzeug und dem Anhängeraufbau schränkt sich gegebenenfalls der maximale Kupplungswinkelbereich ein. Wie weit sich der maximale Kupplungswinkelbereich dabei einschränken kann, hängt auch von den Parametern des Anhängers ab. Insbesondere kann eine derartige Einschränkung auch von der Distanz zwischen der Anhänger-Kupplungseinheit der Anhängerkupplung des Anhängers und dem Anhängeraufbau des Anhängers abhängen. Die Vorgabe des vorbestimmten Mindestabstands durch den Fahrer kann beispielsweise mittels der Mensch-Maschine-Schnittstelle erfolgen. Insbesondere kann dies in einem Menü des Fahrzeugs erfolgen.

Eine vorteilhafte Ausgestaltungsform sieht vor, dass aus dem maximalen Kupplungswinkelbereich nur diejenigen Kupplungswinkel durch den Fahrer auswählbar sind, bei welchen eine vorbestimmte Maximalanzahl an Fahrtrichtungswechseln während eines Manövrierens des Fahrzeugs entlang der Trajektorie nicht überschritten wird. Aufgrund der Umgebung des Fahrzeugs, der Lageposition des Fahrzeugs und/oder aufgrund der Orientierung der Anhängerlängsachse sowie der Anhänger-Kupplungseinheitsposition kann es vorkommen, dass bestimmte Kupplungswinkel ein ausgiebiges Rangieren während eines Manövrierens des Fahrzeugs entlang der Trajektorie erfordern. Ein derartiges Rangieren kann zu zahlreichen Fahrtrichtungswechseln bzw. Gangwechseln (Wechsel zwischen Vorwärts- und Rückwärtsgang) führen. Ein zahlreiche Fahrtrichtungswechsel umfassendes Rangieren des Fahrzeugs kann vom Fahrer sowie weiteren Passagieren und/oder Passanten als störend und/oder als ungeschickt empfunden werden. Daher kann es von Vorteil sein, wenn der Fahrer des Fahrzeugs nur diejenigen Kupplungswinkel auswählen kann, bei welchen die vorbestimmte Maximalanzahl an Fahrtrichtungswechseln nicht überschritten wird. Die vorbestimmte Maximalanzahl an Fahrtrichtungswechseln kann dabei gegebenenfalls auch in einem Menü des Fahrzeugs mittels der Mensch-Maschine-Schnittstelle durch den Fahrer vorgegeben werden.

Weiterhin ist es vorteilhaft, wenn aus dem maximalen Kupplungswinkelbereich nur diejenigen Kupplungswinkel durch den Fahrer auswählbar sind, bei welchen ein kollisionsfreies Manövrieren des Fahrzeugs entlang der Trajektorie möglich ist, wobei eine Beurteilung des kollisionsfreien Manövrierens auf den Umfelddaten basiert. Mittels der empfangenen Umfelddaten kann die Umgebung des Fahrzeugs beschrieben werden. Zum einen können die Umfelddaten zum Erfassen des Anhängers sowie dessen Parametern verwendet werden und zum anderen können weitere Objekte, wie beispielsweise Fahrzeuge, Hindernisse, Verkehrsschilder, Verkehrszeichen und/oder dergleichen, erfasst werden. Ein derartiges Umfeldmodell, also die Beschreibung der Umgebung des Fahrzeugs mittels der Umfelddaten, kann zum Planen der Trajektorie verwendet werden. Dabei kann es vorkommen, dass bestimmte Trajektorien, welche unabhängig von etwaigen Hindernissen prinzipiell dazu geeignet sind, das Fahrzeug in eine Koppelposition zu Manövrieren und den Anhänger im Kupplungswinkel an das Fahrzeug zu koppeln, aufgrund von weiteren Objekten in der Umgebung des Fahrzeugs jedoch nicht kollisionsfrei durchfahren werden können.

Ist der Anhänger beispielsweise auf dem Seitenstreifen geparkt und befindet sich ein weiteres Fahrzeug in Zugrichtung vor dem Anhänger, wobei nur eine Lücke von beispielsweise 3 m vor dem Anhänger vorhanden ist, so kann der Anhänger gegebenenfalls nur in einem Winkelbereich von beispielsweise 30° bis 60° an das Fahrzeug angekoppelt werden. Nichtsdestotrotz kann der maximale Kupplungswinkelbereich, welcher im Falle von keinerlei Hindernissen theoretisch möglich wäre, einen Winkelbereich von -60° bis 60° aufweisen. In einem derartigen Fall ist es also von Vorteil, wenn der Fahrer des Fahrzeugs nur den Bereich auswählen kann, bei welchem ein kollisionsfreies Manövrieren des Fahrzeugs entlang der Trajektorie möglich ist, also den Bereich von 30° bis 60°.

Zudem ist es vorteilhaft, wenn der Kupplungswinkel, sofern dieser in Abhängigkeit von der Systemeingabe bestimmt wird, so bestimmt wird, dass die Anzahl an Fahrtrichtungswechseln während eines zumindest teilautomatisierten Manövrierens minimal ist. Mit anderen Worten kann es also von Vorteil sein, wenn der Fahrer des Fahrzeugs den Anhänger einfach nur schnellstmöglich an das Fahrzeug koppeln möchte, dass der Kupplungswinkel so bestimmt wird, dass möglichst wenig Fahrtrichtungswechsel bzw. Gangwechsel durchgeführt werden müssen. Beim Bestimmen des Kupplungswinkels kann also die Anzahl an Fahrtrichtungswechseln minimiert werden. Infolgedessen kann das Fahrzeug während eines zumindest teilautomatisierten Manövrierens so beispielsweise in einem oder wenigen Zügen zum Anhänger manövriert werden, sodass der Anhänger anschließend direkt an das Fahrzeug gekoppelt werden kann.

Schließlich ist es auch vorteilhaft, wenn der Kupplungswinkel, sofern dieser in Abhängigkeit von der Systemeingabe bestimmt wird, durch den Winkel der Fahrzeuglängsachse relativ zu der Anhängerlängsachse vorgegeben wird, welcher basierend auf der Lageposition des Fahrzeugs sowie den Parametern des Anhängers berechnet wird. Mit anderen Worten kann es beispielsweise von Vorteil sein, wenn der Fahrer das Fahrzeug beispielsweise manuell in einen Bereich um den Anhänger manövriert, zum Stillsand bringt und die aktuelle Ausrichtung des Fahrzeugs relativ zu der Ausrichtung des Anhängers den Kupplungswinkel implizit, also aufgrund der aktuellen Lageposition, vorgibt. Anschließend kann die Trajektorie für das Fahrzeug derart geplant werden, dass das Fahrzeug insgesamt nur lateral und/oder longitudinal versetzt wird, der Winkel zwischen der Fahrzeuglängsachse und der Anhängerlängsachse sich im Wesentlichen jedoch nicht ändert. So kann der Wunsch des Fahrers einfach berücksichtigt werden und das Ankoppelmanöver kann überaus zügig durchgeführt werden.

Eine erfindungsgemäße Recheneinrichtung ist zum Durchführen eines erfindungsgemäßen Verfahrens und der vorteilhaften Ausgestaltungen davon eingerichtet. Die Recheneinrichtung kann dabei vorzugsweise einen oder mehrere programmierbare Prozessoren, die einen in dessen Arbeitsspeicher geladenen Programmcode eines Computerprogramms abarbeiten, umfassen.

Ein erfindungsgemäßes Assistenzsystem für ein Fahrzeug ist zum Durchführen eines erfindungsgemäßen Verfahrens und der vorteilhaften Ausgestaltungen davon eingerichtet. Das Assistenzsystem kann zumindest einen Umfeldsensor aufweisen, mit dem/denen Umfelddaten, welche die Umgebung des Fahrzeugs beschreiben, bereitgestellt werden können. Darüber hinaus kann das Assistenzsystem eine erfindungsgemäße Recheneinrichtung aufweisen, die beispielsweise durch zumindest ein elektronisches Steuergerät gebildet sein kann. Ferner kann das Assistenzsystem dazu ausgebildet sein, das Fahrzeug zumindest teilautomatisiert zu manövrieren. Dabei kann ein derartiges zumindest teilautomatisiertes Manövrieren entlang einer geplanten Trajektorie erfolgen.

Unter dem Begriff des "zumindest teilautomatisierten" Fahrens bzw. Manövrierens ist im Rahmen des Dokuments Fahren bzw. Manövrieren mit automatisierter Quer- und/oder Längsführung zu verstehen. Der Begriff des "zumindest teilautomatisierten" Fahrens bzw. Manövrierens umfasst automatisiertes Fahren mit einem beliebigen Automatisierungsgrad. Beispielhafte Automatisierungsgrade sind assistiertes, teilautomatisiertes, hochautomatisiertes, vollautomatisiertes und autonomes Fahren (mit jeweils zunehmendem Automatisierungsgrad).

Ein weiterer Aspekt der Erfindung betrifft ein Computerprogramm, umfassend Befehle, die bei der Ausführung des Programms durch eine Recheneinrichtung diese veranlassen, ein erfindungsgemäßes Verfahren und die vorteilhaften Ausgestaltungen davon auszuführen. Des Weiteren betrifft die Erfindung ein computerlesbares (Speicher)Medium, umfassend Befehle, die bei der Ausführung durch eine Recheneinrichtung diese veranlassen, ein erfindungsgemäßes Verfahren und die vorteilhaften Ausgestaltungen davon auszuführen.

Ein erfindungsgemäßes Fahrzeug umfasst ein erfindungsgemäßes Assistenzsystem. Das Fahrzeug kann beispielsweise als Lastkraftwagen, Nutzkraftwagen, selbstfahrende Arbeitsmaschine, Wohnmobil oder dergleichen ausgebildet sein. Insbesondere kann das Fahrzeug auch als Personenkraftwagen ausgebildet sein.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Assistenzsystem, für das erfindungsgemäße Fahrzeug, für das erfindungsgemäße Computerprogramm sowie für das erfindungsgemäße computerlesbare (Speicher)Medium.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweilig angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Assistenzsystem zur Unterstützung eines Fahrers während eines Ankoppelvorgangs aufweist,
- Fig. 2: eine schematische Darstellung eines Fahrzeugs sowie eines Anhängers, welcher an das Fahrzeug ankoppelbar ist,
- Fig. 3: eine schematische Darstellung einer Mensch-Maschine-Schnittstelle, welche dazu eingerichtet ist, eine Systemeingabe eines Fahrers zu erfassen,
- Fig. 4: eine schematische Darstellung des Fahrzeugs sowie des Anhängers gemäß Fig. 2 mit einer zusätzlichen Darstellung einer Trajektorie, entlang welcher das Fahrzeug während eines Ankoppelvorgangs manövriert werden kann,
- Fig. 5: eine schematische Darstellung des Fahrzeugs sowie des Anhängers gemäß Fig. 2, wobei das Fahrzeug entlang der Trajektorie gemäß Fig. 4 manövriert wurde und der Anhänger an das Fahrzeug angekoppelt ist,
- Fig. 6: eine schematische Darstellung des Fahrzeugs sowie des Anhängers, wobei der Kupplungswinkel implizit durch die Ausgangsposition des Fahrzeugs vorgegeben wird bzw. in Abhängigkeit von der Systemeingabe bestimmt wird,
- Fig. 7: eine Darstellung eines Fahrzeugs sowie eines Anhängers, wobei der Kupplungswinkel implizit dadurch vorgegeben wird, dass der Anhänger schnellstmöglich an das Fahrzeug angekoppelt werden kann,
- Fig. 8: eine schematische Darstellung eines Fahrzeugs sowie eines Anhängers, welcher auf einem Seitenstreifen einer Fahrbahn geparkt ist und ein maximaler Kupplungswinkelbereich dadurch eingeschränkt wird,
- Fig. 9: eine schematische Darstellung des Fahrzeugs sowie des Anhängers, gemäß Fig. 8, wobei der maximale Kupplungswinkelbereich aufgrund eines weiteren Verkehrsteilnehmers zusätzlich eingeschränkt ist,

- Fig. 10: eine schematische Darstellung einer Mensch-Maschine-Schnittstelle, wobei der maximale Kupplungswinkelbereich, welcher durch den Fahrer auswählbar ist, aufgrund der Situation gemäß Fig. 9 eingeschränkt ist.

In den Figuren werden gleiche oder funktionsgleiche Elemente mit den gleichen Bezugszeichen versehen.

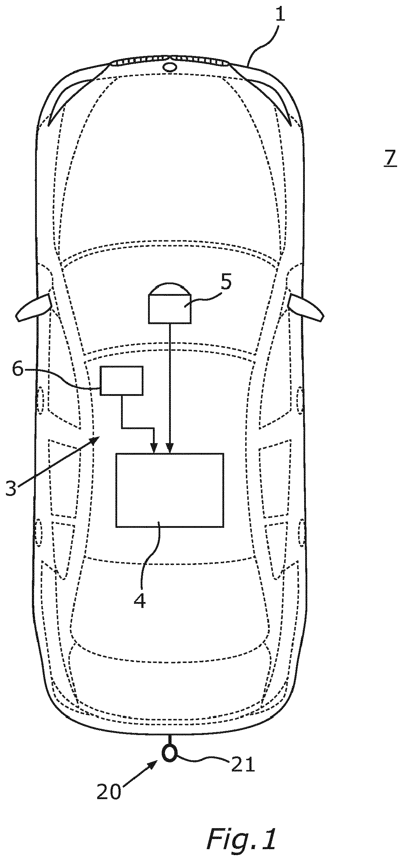

Fig. 1 zeigt eine schematische Darstellung eines Fahrzeugs 1, welches eine Anhängerkupplung 20 aufweist. Die Anhängerkupplung 20 weist zudem eine Fahrzeug-Kupplungseinheit 21 auf, welche in Form einer Kupplungskugel dargestellt ist. Das Fahrzeug 1 weist ein Assistenzsystem 3 auf. Das Assistenzsystem 3 ist dazu eingerichtet, einen Fahrer des Fahrzeugs 1 im Rahmen eines Ankoppelvorgangs des Fahrzeugs 1 mit einem Anhänger 2 zu unterstützen. Das Assistenzsystem 3 umfasst eine Recheneinrichtung 4, welche unter anderem dazu eingerichtet ist, Umfelddaten von zumindest einem Umfeldsensor 5 des Fahrzeugs 1 zu empfangen. Ferner kann die Recheneinrichtung 4 eine Systemeingabe des Fahrers mittels einer Mensch-Maschine-Schnittstelle 6 erfassen.

Das Fahrzeug 1 kann insbesondere als Personenkraftwagen ausgebildet sein. Darüber hinaus kann das Fahrzeug 1 im Allgemeinen aber auch ein Lastkraftwagen, ein Nutzkraftwagen, eine selbstfahrende Arbeitsmaschine, ein Wohnmobil oder dergleichen sein. Insbesondere kann es sich bei dem Fahrzeug 1 auch um einen Traktor, eine land- oder forstwirtschaftliche Zugmaschine, einen Sattelschlepper oder dergleichen handeln.

Der Umfeldsensor 5 ist in Fig. 1 als Kamera dargestellt. Ebenso gut kann als der Umfeldsensor 5 auch ein Radar-, Lidar- und/oder Ultraschall-Sensor verwendet werden. Der Umfeldsensor 5 bzw. die Umfeldsensoren 5 liefern dabei Umfelddaten, welche eine Umgebung 7 des Fahrzeugs 1 beschreiben, an die Recheneinrichtung 4. Typischerweise werden hierfür mehrere Umfeldsensoren 5 verwendet. Die Darstellung eines einzelnen Umfeldsensors 5 in Fig. 1 dient hierbei der Übersichtlichkeit. Es ist also insbesondere denkbar, dass mehrere Umfeldsensoren 5 und auch verschiedenste Sensortypen zum Einsatz kommen.

Die Mensch-Maschine-Schnittstelle 6 kann beispielsweise ein Touch Screen sein. Die Mensch-Maschine-Schnittstelle 6 kann ebenso gut ein Display inklusive klassischer Bedienelemente wie beispielsweise Druckknöpfen sein. Zudem sind auch Head-up-Displays in Kombination mit Bedienelementen, einer Sprachsteuerung oder dergleichen denkbar. Die Mensch-Maschine-Schnittstelle 6 dient dazu einen Unterstützungswunsch des Fahrers zum Ankoppeln des Anhängers 2 an das Fahrzeug 1 zu erfassen.

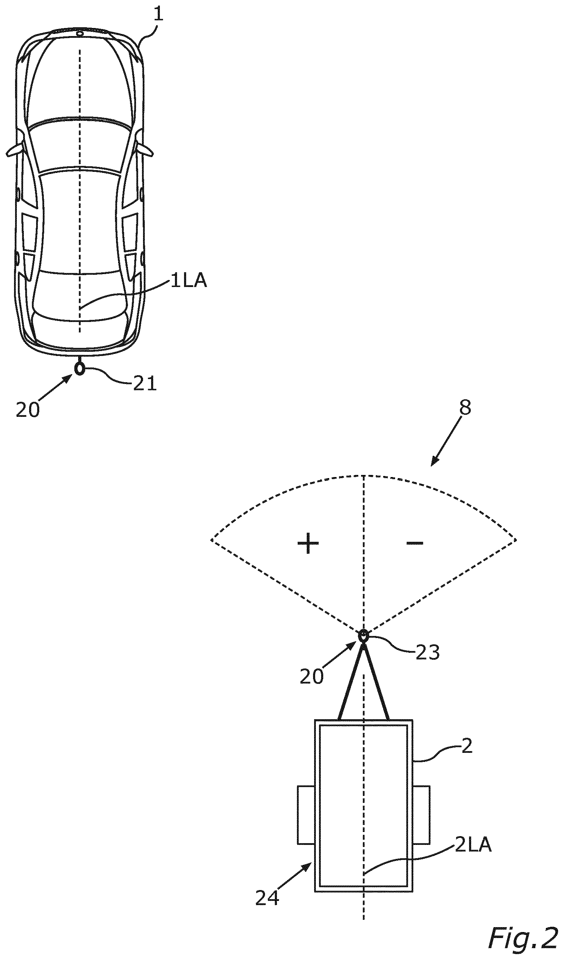

Fig. 2 zeigt eine schematische Darstellung des Fahrzeugs 1 sowie eines Anhängers 2, welcher an das Fahrzeug 1 angekoppelt werden soll. Darüber hinaus ist in der schematischen Darstellung die Fahrzeuglängsachse 1LA sowie die Anhängerlängsachse 2LA eingezeichnet. Zudem ist ein maximaler Kupplungswinkelbereich 8 skizziert. Der maximale Kupplungswinkelbereich erstreckt sich in diesem Beispiel in etwa von -60° bis +60°. Der positive Winkelbereich des maximalen Kupplungswinkelbereichs 8 ist dabei durch ein Pluszeichen gekennzeichnet. Der negative Winkelbereich des maximalen Kupplungswinkelbereichs 8 ist durch ein Minuszeichen gekennzeichnet.

Der Anhänger 2 ist in Fig. 2 als einfacher einachsiger Pkw-Anhänger dargestellt. Der Anhänger kann jedoch ebenso gut als Wohnwagen, Pferdeanhänger, Sattelanhänger oder dergleichen ausgebildet sein. In dem vorliegenden Beispiel handelt es sich um einen ungelenkten Anhänger. Es ist jedoch ebenso denkbar, dass der Anhänger eine Schwenkachslenkung bzw. eine Drehschemellenkung aufweist.

Der Anhänger 2 weist zudem eine Anhängerkupplung 20 auf. Die Anhängerkupplung 20 umfasst eine Anhänger-Kupplungseinheit 23 dargestellt in Form einer Zugkugelkupplung. Ferner umfasst der Anhänger 2 einen Anhängeraufbau 24.

Bei der Anhänger-Kupplungseinheit 23 handelt es zusammen mit der Fahrzeug-Kupplungseinheit 21 um zwei mechanisch zusammenwirkende Vorrichtungen, welche dazu eingerichtet sind, das Fahrzeug 1 mit dem Anhänger 2 zu verbinden. Je nach Art des Fahrzeuges 1 und des Anhängers 2 kann es sich bei der Anhänger-Kupplungseinheit 23 und der Fahrzeug-Kupplungseinheit 21 auch um entsprechenden Kupplungsteile einer Bolzenkupplung, einer Maulkupplung oder einer Sattelkupplung handeln. In den vorliegenden Figuren handelt es sich exemplarisch um entsprechende Kupplungsteile einer Kugelkopfkupplung, welche vor allem im Personenkraftwagenbereich zusammen mit leichten Anhängern (mit/ohne Auflaufbremse) - wie in den vorliegenden Figuren dargestellt - dem heutigen Kupplungsstandard entsprechen.

Mittels der Umfelddaten des zumindest einen Umfeldsensors 5 des Fahrzeugs 1 können Parameter des Anhängers 2 erfasst werden. Diese Parameter beschreiben zumindest die Anhängerlängsachse 2LA sowie die Anhänger-Kupplungseinheitsposition, also die Position der Anhänger-Kupplungseinheit 23. Darauf aufbauend kann eine Lageposition des Fahrzeugs 1, welche die Position des Fahrzeugs 1 relativ zur Position der Anhänger-Kupplungseinheit 23 beschreibt, bestimmt werden. Die Lageposition des Fahrzeugs 1 wird dabei ebenfalls mittels der Umfelddaten des Umfeldsensors 5 und/oder unter Berücksichtigung der Parameter des Anhängers 2 bestimmt. Von besonderer Bedeutung ist dabei die Position der Fahrzeug-Kupplungseinheit 21 der Anhängerkupplung 20 des Fahrzeugs 1 sowie die Fahrzeuglängsachse 1LA.

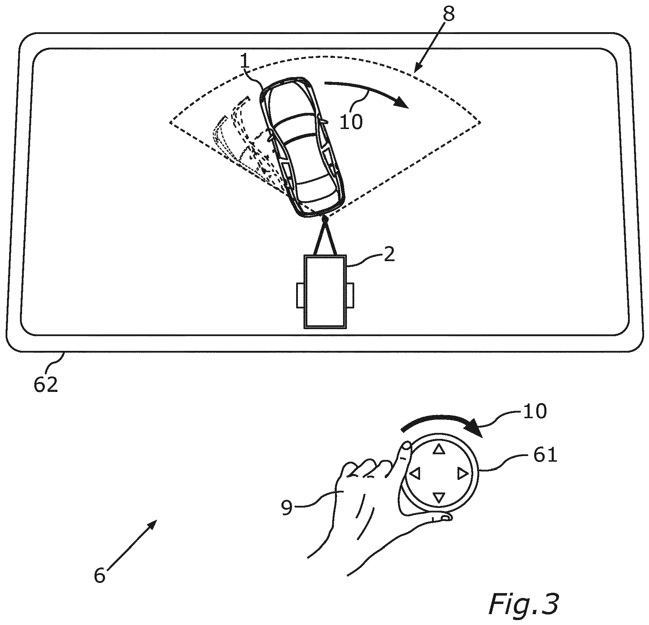

Fig. 3 zeigt eine schematische Darstellung einer Mensch-Maschine-Schnittstelle 6, welche dazu eingerichtet ist, die Systemeingabe des Fahrers des Fahrzeugs 1 zu erfassen. Die Mensch-Maschine-Schnittstelle 6 umfasst ein Display 62 sowie ein Bedienelement 61 mit welchem der Fahrer des Fahrzeugs 1 und/oder ein Nutzer des Fahrzeugs mittels seiner Hand 9 interagieren kann. In diesem Beispiel wird der mittels der Umfelddaten erfasste Anhänger 2 im Display 62 angezeigt. Darüber hinaus kann ein maximaler Kupplungswinkelbereich 8 im Display 62 angezeigt werden. Zudem ist denkbar, dass das Fahrzeug 1 ebenso auf dem Display 62 visualisiert wird. Der Fahrer des Fahrzeugs 1 kann mittels seiner Hand 9 und dem Bedienelement 61 mittels Rotation, welche durch den Pfeil 10 dargestellt ist, einen Kupplungswinkel ϕ aus dem maximalen Kupplungswinkelbereich 8 auswählen. Hierbei ist zudem denkbar, dass der Kupplungswinkel ϕ, welcher aktuell ausgewählt ist, im Display 62 hervorgehoben wird. Dreht der Fahrer oder ein Nutzer des Fahrzeugs 1 mit seiner Hand 9 am Bedienelement 61, so ist es denkbar, dass das Fahrzeug 1 auf dem Display 62 innerhalb des maximalen Kupplungswinkelbereichs 8 um die Anhänger-Kupplungseinheit 23 der Anhängerkupplung 20 des Anhängers 2 rotiert wird. Diese Bewegung wird in Fig. 3 durch einen weiteren Pfeil 10 angedeutet. Ferner ist es denkbar, dass die Darstellung des Fahrzeugs 1 sowie des Anhängers 2 im Display 62 mit einer 360° Rundumsicht des Fahrzeugs 1 und/oder des Anhängers 2 kombiniert bzw. überlagert wird.

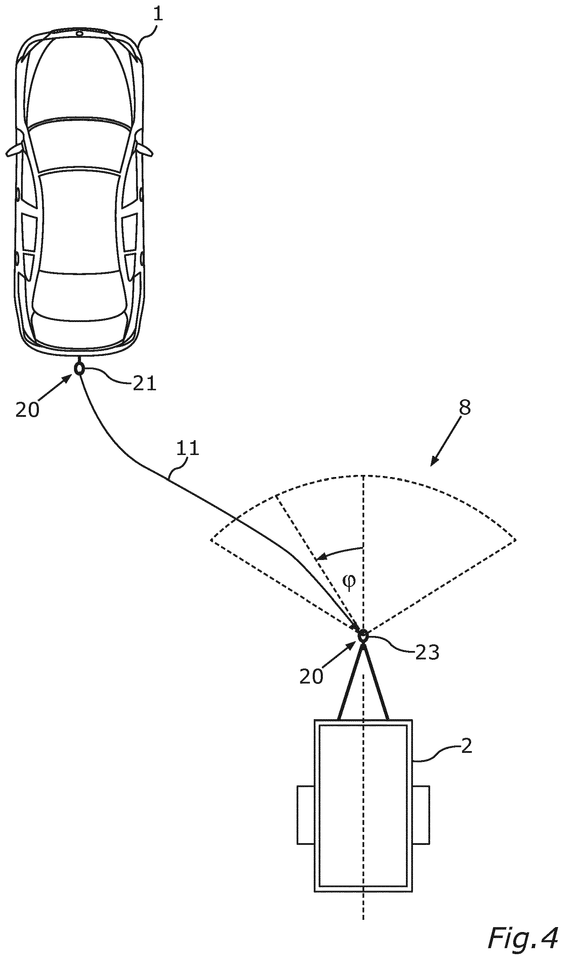

Fig. 4 zeigt in einer schematischen Darstellung das Fahrzeug 1 sowie den Anhänger 2 gemäß Fig. 2, wobei eine zusätzliche Trajektorie 11 eingezeichnet ist. Basierend auf der Systemeingabe, welche in diesem Fall durch eine explizite Eingabe des Kupplungswinkels ϕ im Rahmen der Systemeingabe dargestellt ist, kann eine Trajektorie 11 geplant bzw. ausgewählt werden. Anschließend kann das Fahrzeug 1 zumindest teilautomatisiert entlang der Trajektorie 11 vom Assistenzsystem 3 manövriert werden. Die Trajektorie 11 beginnt in einem Ausgangspunkt und ist dadurch bestimmt, dass sich die Fahrzeug-Kupplungseinheit 21 der Anhängerkupplung 20 des Fahrzeugs 1 nach dem zumindest teilautomatisierten Manövrieren des Fahrzeugs 1 entlang der Trajektorie 11 in einem Toleranzbereich um die Position der Anhänger-Kupplungseinheit 23 der Anhängerkupplung 20 des Anhängers 2 befindet.

Das Assistenzsystem 3 des Fahrzeugs 1 kann dabei derart ausgestaltet sein, dass beispielsweise die Querführung des Fahrzeugs 1 durch das Assistenzsystem 3 übernommen wird. Ebenso ist es aber auch denkbar, dass das Assistenzsystem 3 die Längs- und Querführung des Fahrzeugs 1 übernimmt. Der Toleranzbereich um die Position der Anhänger-Kupplungseinheit 23 der Anhängerkupplung 20 des Anhängers 2 kann vorbestimmt sein. Im Optimalfall, sofern es die äußeren Gegebenheiten zulassen, kommt die Fahrzeug-Kupplungseinheit 21 der Anhängerkupplung 20 des Fahrzeugs 1 genau in der Anhänger-Kupplungseinheitsposition zum Stehen. Beispielsweise kann im Falle einer Kugelkopfkupplung hierfür gegebenenfalls auch auf ein möglicherweise optionales adaptives Fahrwerk des Fahrzeugs 1 zurückgegriffen werden. Beispielsweise kann das Fahrzeug 1 mittels eines derartigen adaptiven Fahrwerks abgesenkt werden, sodass die Fahrzeug-Kupplungseinheit 21, in diesem Fall die Kupplungskugel, direkt unterhalb der Anhänger-Kupplungseinheit 23, also der Zugkugelkupplung, positioniert werden kann.

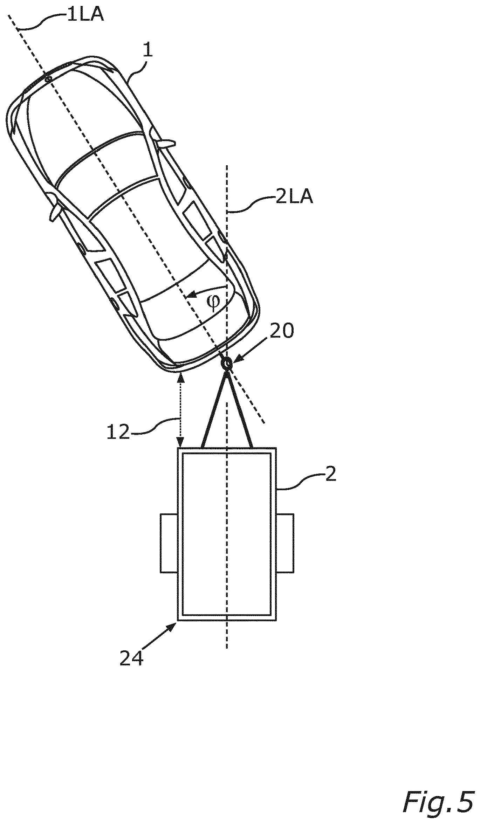

Nach dem Manövrieren des Fahrzeugs 1 entlang der Trajektorie 11 ist das Fahrzeug 1 so positioniert, dass die Fahrzeuglängsachse 1LA im Kupplungswinkel ϕ zur Anhängerlängsachse 2LA orientiert ist. Diese Situation ist nochmals in Fig. 5 dargestellt. Darüber hinaus ist in Fig. 5 zusätzlich der Abstand zwischen dem Fahrzeug 1 und dem Anhängeraufbau 24 dargestellt. Dieser Abstand 12 kann beispielsweise auch in Form eines vorbestimmten Mindestabstands zwischen dem Fahrzeug 1 und dem Anhängeraufbau 24 durch den Fahrer vorgegeben werden. Eine derartige Vorgabe eines vorbestimmten Mindestabstands kann einen maximalen Kupplungswinkelbereich 8 einschränken. Dies ist insbesondere dann relevant, wenn der Abstand zwischen dem Anhängeraufbau 24 und der Anhänger-Kupplungseinheit 23 gering ist. In einem solchen Fall und bei einem großen Kupplungswinkel ϕ kann dies dazu führen, dass der Fahrer des Fahrzeugs 1 zum Ankoppeln des Anhängers 2 an das Fahrzeug 1 um das Fahrzeug 1 oder um den Anhänger 2 herumgehen müsste, um zur Anhängerkupplung 20 des Fahrzeugs 1 bzw. des Anhängers 2 zu gelangen.

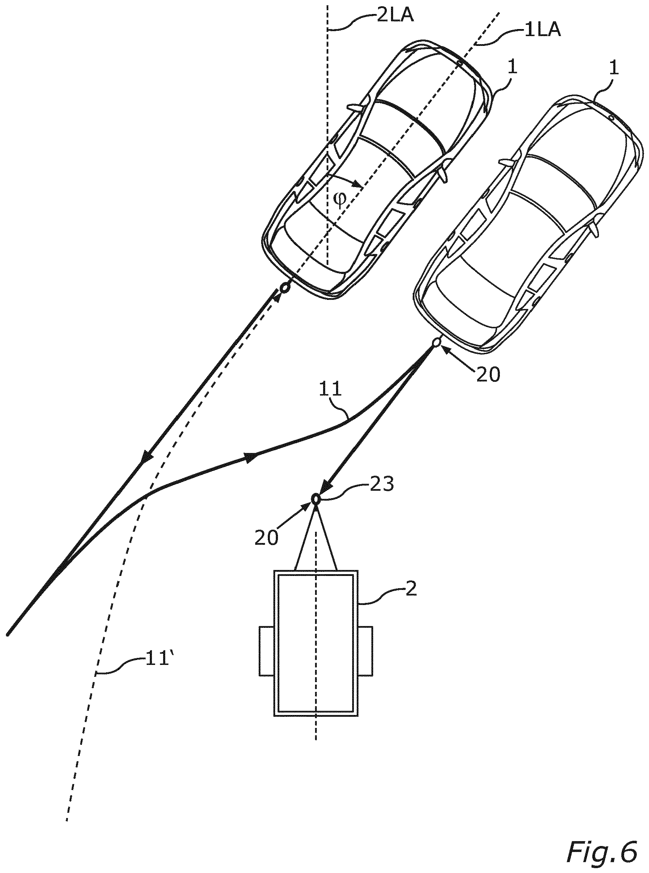

Fig. 6 zeigt in einer schematischen Darstellung das Fahrzeugs 1 sowie den Anhänger 2, wobei der Kupplungswinkel ϕ in Abhängigkeit von der Systemeingabe bestimmt wird. Mit anderen Worten erfolgt eine implizite Eingabe des Kupplungswinkels ϕ dadurch, dass das Fahrzeug 1 entlang der (gestrichelten) Trajektorie 11' vom Fahrer des Fahrzeugs 1 manuell manövriert wird und der Fahrer des Fahrzeugs 1 am Ende der Trajektorie 11' Unterstützung beim Ankoppelvorgang wünscht, wobei das Fahrzeug 1 im gekoppelten Zustand so orientiert sein soll, wie es am Ende der Trajektorie 11' orientiert ist.

Mit anderen Worten entspricht der Winkel zwischen der Fahrzeuglängsachse 1LA und der Anhängerlängsachse 2LA am Ende der Trajektorie 11' dem Kupplungswinkels ϕ. In diesem Beispiel kann das zumindest teilautomatisierte Manövrieren des Fahrzeugs 1 hin zum Anhänger 2 dadurch realisiert werden, dass das Fahrzeug 1 von dem Assistenzsystem 3 entlang der Trajektorie 11 zunächst zurücksetzt, anschließend vorwärts fährt, parallel zur Ausgangsposition zum Stehen kommt, um anschließend gerade zurückzusetzen bis die Fahrzeug-Kupplungseinheit 21 der Anhängerkupplung 20 des Fahrzeugs 1, also in diesem Fall die Kupplungskugel, direkt unter der Anhänger-Kupplungseinheit 23 der Anhängerkupplung 20 des Anhängers 2 bzw. in einem Toleranzbereich um die Anhänger-Kupplungseinheit 23 der Anhängerkupplung 20 des Anhängers 2, also der Zugkugelkupplung, positioniert ist. Schließlich steht das Fahrzeug 1 so, dass der Anhänger 2 an das Fahrzeug 1 angekoppelt werden kann und sich zudem die Fahrzeuglängsachse 1LA im Kupplungswinkel ϕ zur Anhängerlängsachse 2LA befindet.

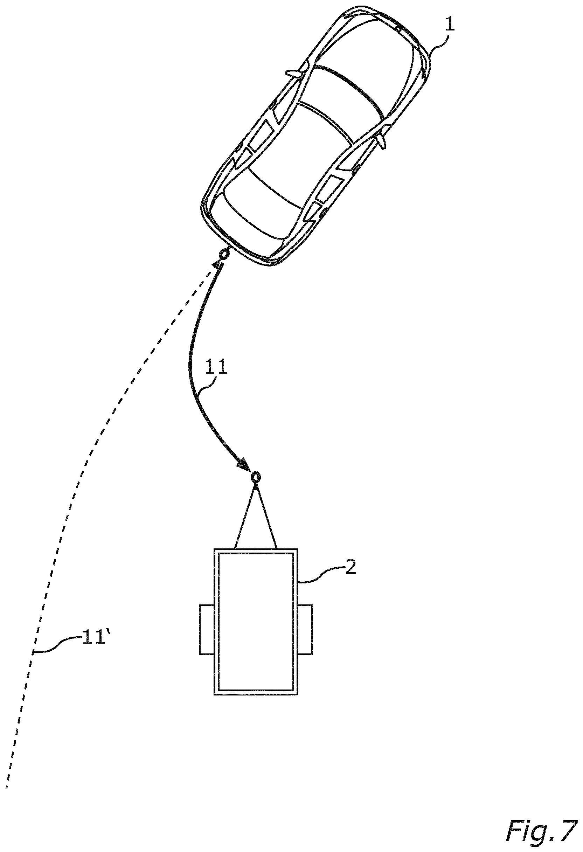

Fig. 7 zeigt in einer schematischen Darstellung das Fahrzeug 1 sowie den Anhänger 2, wobei der Kupplungswinkel ϕ erneut in Abhängigkeit von der Systemeingabe bestimmt wird (wie bereits in Fig. 6 dargestellt). Mit anderen Worten erfolgt eine implizite Eingabe des Kupplungswinkels ϕ dadurch, dass das Fahrzeug 1 entlang der (gestrichelten) Trajektorie 11' vom Fahrer des Fahrzeugs 1 manuell manövriert wird und der Fahrer des Fahrzeugs 1 am Ende der Trajektorie 11' Unterstützung beim Ankoppelvorgang wünscht, wobei das Fahrzeug 1 schnellstmöglich in eine Position manövriert werden soll, in welcher der Anhänger 2 an das Fahrzeug 1 gekoppelt werden kann.

Der Unterstützungswunsch des Fahrers zum schnellstmöglichen Ankoppeln des Anhängers 2 an das Fahrzeug 1 bestimmt den Kupplungswinkel ϕ somit in Abhängigkeit der Systemeingabe. Schnellstmöglich kann in diesem Zusammenhang bedeuten, dass das Manövrieren des Fahrzeugs 1 entlang der Trajektorie 11 durch das Assistenzsystem 3 möglichst wenig Fahrtrichtungswechsel, eine möglichst kurze Strecke oder eine möglichst kurze Zeitdauer umfasst bzw. beansprucht.

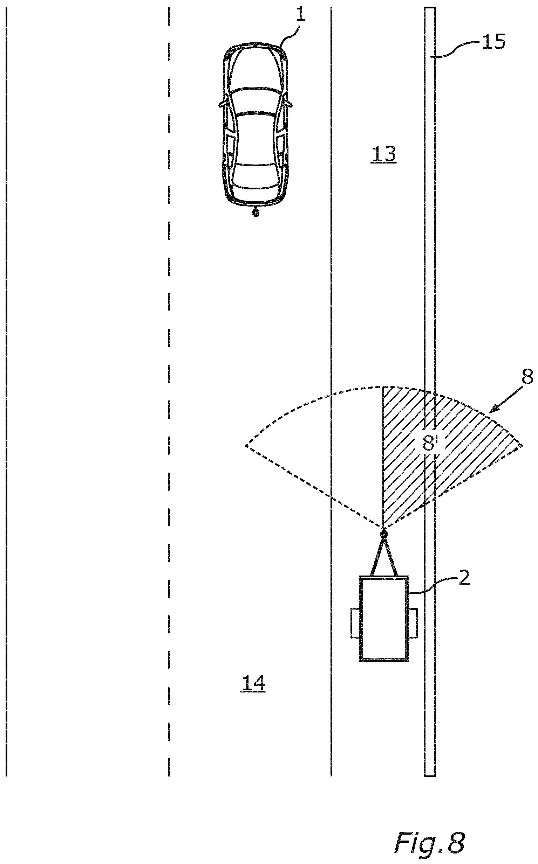

Fig. 8 zeigt in einer schematischen Darstellung das Fahrzeug 1 sowie den Anhänger 2, welcher auf einem Seitenstreifen 13 einer Fahrbahn 14 geparkt ist. Wünscht der Fahrer des Fahrzeugs 1 in dieser Situation eine Unterstützung beim Ankoppeln des Anhängers 2 an das Fahrzeug 1 bzw. beim Positionieren des Fahrzeugs 1, sodass der Anhänger 2 an das Fahrzeug 1 angekoppelt werden kann, so ist der maximale Kopplungswinkelbereich 8 aufgrund des Bordsteins 15 eingeschränkt. Diese Einschränkung ist in Fig. 8 durch den schraffierten Bereich 8' gekennzeichnet. Mit anderen Worten ist für den Fahrer des Fahrzeugs 1 aus dem maximalen Kupplungswinkelbereich 8 nur derjenige Kupplungswinkel ϕ auswählbar, bei welchem ein kollisionsfreies Manövrieren des Fahrzeugs 1 entlang einer entsprechend geplanten Trajektorie 11 möglich ist. Die Beurteilung des kollisionsfreien Manövrierens kann beispielsweise mittels der Umfelddaten des zumindest einen Umfeldsensors 5 erfolgen.

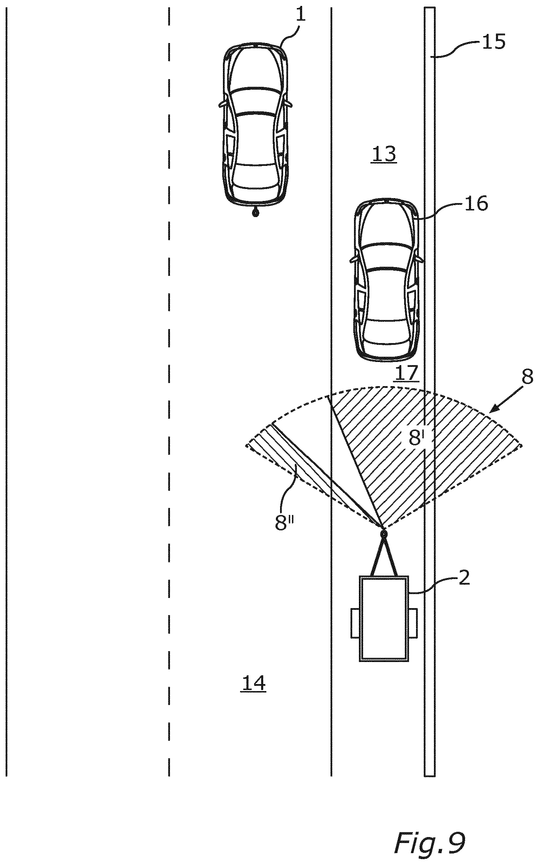

Fig. 9 zeigt in einer schematischen Darstellung das Fahrzeug 1 sowie den Anhänger 2, welcher auf einem Seitenstreifen 13 einer Fahrbahn 14 geparkt ist. Eine ähnliche Situation ist bereits in Fig. 8 offenbart und detailliert beschrieben. Im Gegensatz zu Fig. 8 befindet sich jedoch ein weiterer Verkehrsteilnehmer 16, dargestellt durch einen Personenkraftwagen, ebenfalls auf dem Seitenstreifen 13. Die Parklücke 17, also der Bereich zwischen dem weiteren Verkehrsteilnehmer 16 und dem Anhänger 2, kann so kurz ausfallen, dass eine nicht unerhebliche Anzahl an Fahrtrichtungswechseln, beispielsweise drei oder mehr, nötig wäre, um das Fahrzeug in Längsrichtung in die Parklücke 17 zu manövrieren und den Anhänger 2 in einem Kupplungswinkel ϕ von 0° an das Fahrzeug 1 anzukoppeln.

Es kann in diesem Zusammenhang von Vorteil sein, wenn eine vorbestimmte Maximalanzahl an Fahrtrichtungswechseln vorgegeben wird, wodurch der maximale Kopplungswinkelbereich 8 gegebenenfalls eingeschränkt wird. Es ist jedoch auch denkbar, dass der Fahrer des Fahrzeugs 1 die vorbestimmte Maximalanzahl an Fahrtrichtungswechseln in einem Menü des Fahrzeugs vorgibt. Die dadurch resultierende Einschränkung ist in Fig. 9 durch den (rechten) schraffierten Winkelbereich 8' dargestellt. Ein ähnlicher Fall ergibt sich, wenn die Parklücke 17 bzw. ein freier Bereich in Zugrichtung vor dem Anhänger 2 zu kurz ausfällt und ein Kupplungswinkel ϕ von 0° aufgrund dessen nicht realisierbar ist. Mit anderen Worten ergibt sich also ein ähnlicher Fall, wenn beispielsweise ein Hindernis oder ein weiterer Verkehrsteilnehmer 16 zu nah in Zugrichtung vor dem Anhänger 2 positioniert ist.

Des Weiteren ist es denkbar, dass ein vorbestimmter Mindestabstand zwischen dem Fahrzeug 1 und dem Anhängeraufbau 24 des Anhängers 2 eingehalten werden soll. Ein derartiger vorbestimmter Mindestabstand kann dazu führen, dass der maximale Kupplungswinkelbereich 8 zusätzlich eingeschränkt wird. Die zusätzliche Einschränkung des maximalen Kupplungswinkelbereichs 8 aufgrund eines vorbestimmten Mindestabstands ist durch den (linken) schraffierten Bereich 8" gekennzeichnet.

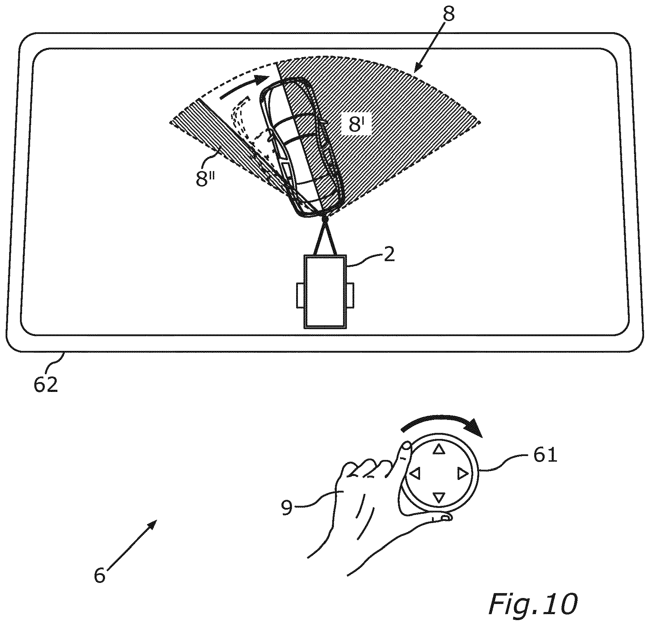

Fig. 10 zeigt in einer schematischen Darstellung eine mögliche Form der Mensch-Maschine-Schnittstelle 6, wobei die Darstellung auf dem Display 62 sich an der in Fig. 9 dargestellten Verkehrssituation orientiert. Der Fahrer des Fahrzeugs 1 kann mit seiner Hand 9 und dem Bedienelement 61 nur jene Kupplungswinkel ϕ aus dem maximalen Kupplungswinkelbereich 8 auswählen, bei welchen eine Trajektorie 11 existiert bzw. realisierbar ist, sodass zum einen die vorbestimmte Maximalanzahl an Fahrtrichtungswechseln nicht überschritten wird und zum anderen der vorbestimmte Mindestabstand zwischen dem Fahrzeug 1 und dem Anhängeraufbau 24 garantiert ist. Die nicht auswählbaren Bereiche 8' und 8ʺ sind auf dem Display 62 in dieser beispielhaften Ausgestaltungsform grau hinterlegt.

## Patentansprüche

1. Verfahren zum Unterstützen eines Fahrers eines Fahrzeugs (1) bei einem Ankoppelvorgang des Fahrzeugs (1) mit einem Anhänger (2), umfassend die Schritte:
- Empfangen von Umfelddaten von zumindest einem Umfeldsensor (5),
- Erfassen von Parametern des Anhängers (2) mittels der Umfelddaten, wobei die Parameter zumindest eine Anhängerlängsachse (2LA) und eine Anhänger-Kupplungseinheitsposition einer Anhänger-Kupplungseinheit (23) des Anhängers (2) beschreiben,
- Bestimmen einer Lageposition des Fahrzeugs (1) mittels der Umfelddaten und/oder unter Berücksichtigung der Parameter des Anhängers (2), wobei die Lageposition zumindest einen Ausgangspunkt des Fahrzeugs (1) relativ zu der Anhänger-Kupplungseinheitsposition (23) sowie eine Fahrzeuglängsachse (1LA) relativ zu der Anhängerlängsachse (2LA) beschreibt,
- Erfassen einer Systemeingabe des Fahrers des Fahrzeugs (1) mittels einer Mensch-Maschine-Schnittstelle (6), wobei die Systemeingabe einen Unterstützungswunsch des Fahrers zum Ankoppeln des Anhängers (2) an das Fahrzeug (1) beschreibt, und
- Planen einer Trajektorie (11) für das Fahrzeug (1), wobei die Trajektorie (11) in dem Ausgangspunkt beginnt und dadurch bestimmt ist, dass eine Fahrzeug-Kupplungseinheit (21) des Fahrzeugs (1) sich nach einem Manövrieren des Fahrzeugs (1) entlang der Trajektorie (11) in einem Toleranzbereich um die Anhänger-Kupplungseinheitsposition befindet, **dadurch gekennzeichnet, dass**
- die Systemeingabe eine explizite Eingabe eines Kupplungswinkels (ϕ) zwischen der Fahrzeuglängsachse und der Anhängerlängsachse umfasst und/oder der Kupplungswinkel (ϕ) in Abhängigkeit von der Systemeingabe bestimmt wird, und
- die Trajektorie (1) zusätzlich dadurch bestimmt ist, dass sich die Fahrzeuglängsachse nach einem Manövrieren des Fahrzeugs (1) entlang der Trajektorie im Kupplungswinkel (ϕ) zur Anhängerlängsachse (2LA) befindet.

2. Verfahren nach Anspruch 1,
**dadurch gekennzeichnet, dass**
ein maximaler Kupplungswinkelbereich (8) bestimmt wird, aus welchem der Kupplungswinkel (ϕ) mittels der Mensch-Maschine-Schnittstelle (6) im Rahmen der expliziten Eingabe durch den Fahrer auswählbar ist.

3. Verfahren nach Anspruch 2,
**dadurch gekennzeichnet, dass**
der maximale Kupplungswinkelbereich (8) so bestimmt wird, dass zwischen dem Fahrzeug (1) und einem Anhängeraufbau (24) des Anhängers (2) ein vorbestimmter Mindestabstand eingehalten wird.

4. Verfahren nach Anspruch 3,
**dadurch gekennzeichnet, dass**
der vorbestimmte Mindestabstand zwischen dem Fahrzeug (1) und dem Anhängeraufbau (24) durch den Fahrer vorgebbar ist.

5. Verfahren nach einem der Ansprüche 2 bis 4,
**dadurch gekennzeichnet, dass**
aus dem maximalen Kupplungswinkelbereich (8) nur diejenigen Kupplungswinkel durch den Fahrer auswählbar sind, bei welchen eine vorbestimmte Maximalanzahl an Fahrtrichtungswechseln während eines Manövrierens des Fahrzeugs (1) entlang der Trajektorie (11) nicht überschritten wird.

6. Verfahren nach einem der Ansprüche 2 bis 5,
**dadurch gekennzeichnet, dass**
aus dem maximalen Kupplungswinkelbereich (8) nur diejenigen Kupplungswinkel (ϕ) durch den Fahrer auswählbar sind, bei welchen ein kollisionsfreies Manövrieren des Fahrzeugs (1) entlang der Trajektorie (11) möglich ist, wobei eine Beurteilung des kollisionsfreien Manövrierens auf den Umfelddaten basiert.

7. Verfahren nach einem der vorhergehenden Ansprüche,
**dadurch gekennzeichnet, dass**
der Kupplungswinkel (ϕ), sofern dieser in Abhängigkeit von der Systemeingabe bestimmt wird, so bestimmt wird, dass die Anzahl an Fahrtrichtungswechseln während eines zumindest teilautomatisierten Manövrierens minimal ist.

8. Verfahren nach einem der Ansprüche 1 bis 6,
**dadurch gekennzeichnet, dass**
der Kupplungswinkel (ϕ), sofern dieser in Abhängigkeit von der Systemeingabe bestimmt wird, durch den Winkel der Fahrzeuglängsachse (1LA) relativ zu der Anhängerlängsachse (2LA) vorgegeben wird, welcher basierend auf der Lageposition des Fahrzeugs (1) sowie den Parametern des Anhängers (2) berechnet wird.

9. Recheneinrichtung (4), welche dazu eingerichtet ist, ein Verfahren zum Unterstützen eines Fahrers eines Fahrzeugs (1) bei einem Ankoppelvorgang des Fahrzeugs (1) mit einem Anhänger (2), gemäß einem der vorhergehenden Ansprüche, auszuführen.

10. Computerprogramm, umfassend Befehle, die bewirken, dass die Recheneinrichtung (4) des Anspruchs 9 die Verfahrensschritte nach einem der Ansprüche 1 bis 8 ausführt.

11. Computerlesbares (Speicher)Medium, auf dem das Computerprogramm nach Anspruch 10 gespeichert ist.

12. Assistenzsystem (3) zum Unterstützen eines Fahrers eines Fahrzeugs (1) bei einem Ankoppelvorgangs des Fahrzeugs (1) mit einem Anhänger (2), umfassend:
- eine Recheneinrichtung (4) nach Anspruch 9,
- eine Mensch-Maschine-Schnittstelle (6) zum Erfassen einer Systemeingabe des Fahrers, wobei die Systemeingabe einen Unterstützungswunsch des Fahrers zum Ankoppeln des Anhängers (2) an das Fahrzeug (1) beschreibt, und
- zumindest einen Umfeldsensor (5), welcher Umfelddaten bereitstellt, welche eine Umgebung (7) des Fahrzeugs (1) beschreiben.

13. Fahrzeug (1), umfassend ein Assistenzsystem (3) nach Anspruch 12.
